# FASCICULE DE BREVET EUROPEEN

(11) **EP 1 347 244 B1**
(45) Date de publication et mention de la délivrance du brevet: **21.12.2005**
(21) Numéro de dépôt: 03370009.7
(22) Date de dépôt: 11.03.2003
(51) Int. Cl.: F24F 3/16, F24F 11/00, B01D 46/44

(54) **Dispositif de traitement d'air et procédé de traitement d'air mis en oeuvre dans un tel dispositif**
Luftbehandlungsvorrichtung und Verfahren zür durchführung diese Luftbehandlung
Air treatment device and method to implement this air treatment in such a device

(30) Priorité: 22.03.2002 FR 0203618
(43) Date de publication de la demande: 24.09.2003
(73) Titulaire: D.T. Filtres Sarl, 59910 Bondues (FR)
(72) Inventeur: Timmerman, Claude, 59910 Bondues (FR)
(74) Mandataire: Duthoit, Michel Georges André

(56) Documents cités:
- EP-A- 0 864 348
- US-A- 5 433 762
- US-A- 5 461 368
- US-A- 5 761 908
- US-A- 6 066 194

## Description

La présente invention concerne un dispositif de traitement d'air ainsi qu'un procédé de traitement d'air mis en oeuvre dans un tel dispositif.

Ce dispositif est particulièrement adapté pour être utilisé dans des zones sensibles telles que hôpitaux, laboratoires, cliniques. Cependant, il pourra également être utilisé dans tout autre type de zone et notamment pour le traitement de l'air dans des zones de chantier.

On connaît des dispositifs permettant le traitement de l'air. Ces dispositifs comportent généralement des moyens de réglage du débit d'air de manière à pouvoir s'adapter notamment au volume de la pièce à traiter ainsi qu'au niveau de traitement d'air que l'on souhaite atteindre.

Ces dispositifs comprennent généralement un ou plusieurs filtres ainsi qu'un système de ventilation.

Actuellement, les dispositifs connus présentent différents inconvénients parmi lesquels la difficulté de régulation du débit d'air. En effet, en fonction du taux d'encrassement des filtres, le débit d'air varie dans le sens d'une diminution lorsque le taux d'encrassement des filtres augmente.

Ainsi, bien que certains dispositifs proposent un réglage du débit d'air, il s'agit en réalité soit d'un réglage de débit d'air moyen, c'est-à-dire tenant compte d'un encrassement moyen du ou des filtres, soit d'un débit d'air calculé par rapport à un filtre neuf. Dans les deux cas, le débit d'air réel ne correspond pas au débit d'air souhaité et ce d'autant plus que le débit d'air varie fortement en fonction de l'encrassement du ou des filtres.

Compte tenu du fait que les débits d'air ne sont pas constants, soit l'utilisateur de ces systèmes sera tenté d'augmenter le débit, ce qui aura pour conséquence d'augmenter la consommation en énergie de l'ensemble et d'accélérer l'usure des pièces, soit l'utilisateur sera tenté de surestimer le débit réel du dispositif, ce qui peut entraîner un mauvais traitement de l'air pouvant avoir des conséquences graves lorsqu'il s'agit, par exemple, du traitement d'air dans les hôpitaux.

Par ailleurs, on connaît du document US-5.761.908 un dispositif de ventilation apte à recycler l'air d'une chambre d'hôpital en maintenant une pression négative de la chambre.

Il présente deux circuits indépendants, un premier circuit, équipé d'un ventilateur, pour évacuer l'air de la chambre vers l'extérieur, et un deuxième circuit, équipé d'un ventilateur, pour alimenter la chambre en air frais.

Ces deux circuits sont équipés de filtres et le dispositif présente des moyens de régulation pour maintenir un débit d'air constant lorsque les filtres s'encrassent. La pression est mesurée dans les deux circuits, une hausse de la pression traduisant une perte de charge et le dispositif compense cette perte en augmentant la vitesse des ventilateurs.

Néanmoins, la pression mesurée à l'aide de capteurs conventionnels ne traduit pas directement la surcharge subie par les moteurs lors de l'encrassement des filtres. Si un capteur vient à se dérégler, cette défaillance peut notamment se traduire en une usure prématurée des moteurs.

Le but de l'invention est de proposer un dispositif de traitement d'air qui pallie les inconvénients précités et permet d'assurer un débit constant de l'air à traiter lorsque le ou les filtres ne dépassent pas une limite d'encrassement.

Un autre but de la présente invention est de proposer un dispositif qui permet de régler de manière fiable et aisée différents débits d'air.

Un autre but de la présente invention est de proposer un dispositif de traitement d'air équipé de moyens de signalisation de l'encrassement du ou des filtres.

Un autre but de la présente invention est de proposer un procédé mettant en oeuvre le dispositif de traitement d'air précité dont le fonctionnement est transparent pour l'utilisateur.

D'autres buts et avantages de la présente invention apparaîtront au cours de la description qui va suivre, qui n'est donnée qu'à titre indicatif, et qui n'a pas pour but de la limiter.

Le dispositif de traitement d'air comprend un boîtier comportant une entrée et une sortie d'air, au moins un filtre disposé au niveau desdites entrée et/ou sortie d'air et des moyens de ventilation comprenant des pales, ledit dispositif comprenant en outre des moyens de régulation de la ventilation en fonction de l'encrassement dudit au moins filtre, de manière à assurer un débit constant de l'air à traiter. Selon l'invention, lesdits moyens de régulation de la ventilation comprennent des moyens de mesure de la pression exercée au niveau des pales des moyens de ventilation de manière à détecter toute variation de la pression correspondant à une variation de débit d'air.

L'invention vise également un procédé de traitement d'air mettant en oeuvre le dispositif de traitement d'air selon les caractéristiques précitées.

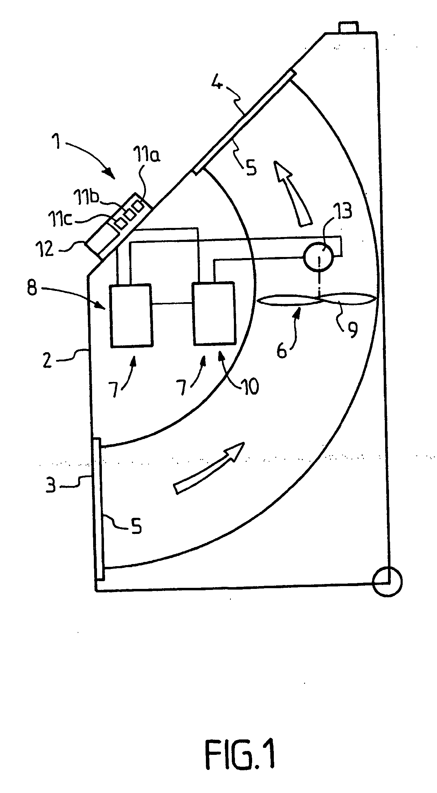

Elle sera mieux comprise à la lecture de la description suivante, accompagnée du dessin en annexe référencé sous la figure 1 et qui montre, selon une vue schématique, un exemple de réalisation du dispositif de traitement d'air conforme à l'invention.

La présente invention est relative à un dispositif de traitement d'air. Il s'agit ainsi, par exemple, d'un dispositif permettant le traitement d'air dans un local ou d'un dispositif permettant de constituer une barrière de filtration.

Comme représenté à la figure 1, le dispositif de traitement d'air 1 comprend un boîtier 2 comportant une entrée 3 et une sortie 4 d'air. En se reportant à la figure 1, on voit ainsi que l'entrée 3 se situe en partie basse du dispositif 1 et que l'air filtré est refoulé par la sortie 4 disposée dans la partie haute du dispositif 1.

Cela étant, cette configuration de l'entrée et de la sortie correspond à un dispositif de traitement d'air placé au niveau du sol, dans d'autres variantes de l'invention, on aurait pu disposer les entrée 3 et sortie 4 d'air selon tout autre configuration connue de l'homme du métier.

Le dispositif de traitement d'air 1 comprend également au moins un filtre 5 disposé au niveau de ladite entrée 3 et/ou sortie 4 d'air.

Ledit dispositif de traitement d'air 1 comprend également des moyens de ventilation 6. Avantageusement, les moyens de ventilation 6 comprennent des pales 9.

Dans le mode de réalisation préféré de l'invention, on prévoit au moins un filtre 5 en aspiration, c'est-à-dire placé en amont des moyens de ventilation 6 et un filtre 5 au refoulement, c'est-à-dire en aval desdits moyens d'aspiration 6.

Cela étant, là encore d'autres solutions sont envisageables et notamment on pourra utiliser uniquement un filtre 5 en entrée.

Par ailleurs, on pourra employer, notamment lorsque le dispositif de traitement est utilisé dans des locaux médicaux, un filtre en aspiration de type gravimétrique et/ou un filtre de type opacimétrique.

On pourra également utiliser, pour le filtre au refoulement, un filtre laminaire.

En outre, et selon une caractéristique avantageuse de l'invention, ledit dispositif 1 comprend des moyens de régulation 7 de la ventilation. Ces moyens de régulation 7 permettent en fonction de l'encrassement dudit au moins un filtre 5 de réguler la ventilation de manière à assurer un débit constant de l'air à traiter.

Lesdits moyens de régulation 7 comprennent des moyens de mesure 8 de la pression exercée au niveau des pales 9 des moyens de ventilation 6.

En effet, la pression exercée au niveau desdites pales 9 est liée notamment au taux d'encrassement des filtres 5 que ceux-ci soit placés en amont ou en aval desdits moyens de ventilation 6.

Ainsi, les moyens de mesure 8 de la pression qui détectent toute variation de pression permettent de déterminer la variation du débit d'air correspondant.

Lesdits moyens de régulation 7 comprennent également des moyens de commande 10 de la vitesse de rotation des moyens de ventilation 6 en fonction des mesures de pression.

Ces moyens de commande 10 permettent de compenser les pertes ou gains de charge et de revenir au débit d'air initial.

Lorsque lesdits moyens de mesure 8 enregistrent une augmentation de pression, correspondant à une perte de charge due à l'encrassement d'un ou des filtres 5, la mesure est transmise aux moyens de commande 10 qui commandent l'augmentation de la vitesse de rotation des moyens de ventilation 6. L'augmentation de la vitesse de rotation des moyens de ventilation 6 permet d'augmenter le débit d'air et ainsi de revenir au débit d'air initial.

Par ailleurs, on prévoit au niveau des moyens de régulation 7 une limite d'encrassement dudit au moins un filtre 5 correspondant à une mesure de pression réalisée par lesdits moyens de mesure 8. Ainsi, au-delà de cette limite et notamment pour éviter une usure trop rapide des moyens de ventilation, les moyens de commande 10 et/ou les moyens de signalisation 12 avertissant l'utilisateur stoppent la ventilation.

En effet, selon un mode préféré de réalisation de l'invention, ledit dispositif de traitement 1 comprend également des moyens de signalisation 12 de l'encrassement dudit au moins un filtre 5. Lesdits moyens de signalisation 12 sont reliés aux moyens de mesure de la pression 8 et permettent d'avertir l'utilisateur de l'usure des filtres et éventuellement d'un remplacement à effectuer. A cette fin, lesdits moyens de signalisation seront de préférence visuels, cela étant, d'autres moyens auraient pu également être envisagés tels que des moyens sonores.

Il est important de signaler à ce niveau que le dispositif de traitement 1 comporte au moins deux niveaux de débit différents.

Dans le mode de réalisation préféré, l'utilisateur peut à tout moment modifier le débit et dispose comme représenté à la figure 1, de trois touches 11a, 11b et 11c correspondant à des débits allant de préférence de 400 m³/heure à 600 m³/heure.

Cela étant, selon une variante de l'invention, il est possible d'envisager un réglage progressif, par exemple à l'aide d'une mollette, du débit.

Compte tenu des différents régimes de rotation des moyens de ventilation 6, il est préférable d'utiliser un moteur présentant un bon rendement sur une gamme étendue de vitesse de rotation. Ainsi, selon le mode de réalisation préféré, les moyens de ventilation 6 comprennent un moteur présentant un rendement supérieur à 60 % pour des vitesses de rotation comprises entre 300 et 1.800 tours/minute.

Par ailleurs, du fait de la faible consommation en énergie, on effectuera de préférence le branchement du dispositif de traitement 1 sur un onduleur de manière à sécuriser ledit dispositif 1 notamment lors de coupure électrique.

L'invention vise également un procédé de traitement d'air mis en oeuvre dans le dispositif de traitement d'air 1 tel que précité.

Selon l'invention, le procédé est le suivant. Un utilisateur sélectionne un débit d'air. Le dispositif programme ensuite lesdits moyens de ventilation 6 en fonction du débit d'air souhaité.

Après la sélection du débit d'air, le procédé consiste à mesurer périodiquement la pression exercée sur les pales 9 des moyens de ventilation 6.

A cet effet, selon un mode de réalisation préféré, lesdits moyens de mesure 8 comportent un circuit imprimé qui calcule la force émise par les pales 9 sur l'arbre moteur les reliant.

Le procédé consiste en outre à ajuster la vitesse de rotation desdits moyens de ventilation 6 de manière à compenser les pertes ou gains de charge et de revenir au débit sélectionné.

Naturellement, d'autres modes de réalisation, à la portée de l'homme de l'art, auraient pu être envisagés sans pour autant sortir du cadre de la présente demande telle que définie dans les revendications ci-après.

## Revendications

1. Dispositif de traitement d'air (1) comprenant un boîtier (2) comportant une entrée (3) et une sortie (4) d'air, au moins un filtre (5) disposé au niveau desdites entrée (3) et/ou sortie d'air (4) et des moyens de ventilation (6) comprenant des pales (9), ledit dispositif de traitement (1) comprend en outre des moyens de régulation (7) de la ventilation en fonction de l'encrassement dudit au moins filtre (5), de manière à assurer un débit constant de l'air à traiter, **caractérisé en ce que** lesdits moyens de régulation (7) de la ventilation comprennent des moyens de mesure (8) de la pression exercée au niveau des pales (9) des moyens de ventilation (6) de manière à détecter toute variation de la pression correspondant à une variation de débit d'air.

2. Dispositif de traitement d'air selon la revendication 1, dans lequel les moyens de régulation (7) comprennent des moyens de commande (10) de la vitesse de rotation des moyens de ventilation (6) en fonction des mesures de pression de manière à compenser les pertes ou gains de charge et de revenir au débit d'air initial.

3. Dispositif de traitement d'air selon l'une quelconque des revendications précédentes, dans lequel ledit dispositif de traitement d'air (1) comporte au moins deux niveaux de débits différents.

4. Dispositif de traitement d'air selon l'une quelconque des revendications précédentes, dans lequel les moyens de ventilation (6) comprennent un moteur présentant un rendement supérieur à 60 % pour des vitesses de rotation comprises entre 300 et 1.800 tours/minute.

5. Dispositif de traitement d'air selon l'une quelconque des revendications précédentes, dans lequel on prévoit un filtre (5) en aspiration et un filtre (5) au refoulement.

6. Dispositif de traitement d'air selon la revendication 5 précédente, dans lequel le filtre (5) en aspiration est de type gravimétrique et/ou opacimétrique.

7. Dispositif de traitement d'air selon l'une ou l'autre des revendications 5 et 6, dans lequel le filtre au refoulement est de type laminaire.

8. Dispositif de traitement d'air selon l'une quelconque des revendications précédentes, dans lequel on prévoit des moyens de signalisation (12) de l'encrassement dudit au moins un filtre (5).

9. Procédé de traitement d'air, mis en oeuvre dans le dispositif, selon l'une quelconque des revendications 1 à 8 précédentes, dans lequel :
- on sélectionne un débit d'air,
- on mesure périodiquement la pression exercée sur les pales (9) des moyens de ventilation (6),
- on ajuste les vitesses de rotation des moyens de ventilation (6) de manière à compenser les pertes ou gains de charge et de revenir au débit sélectionné.

## Patentansprüche

1. Luftbehandlungsvorrichtung (1), umfassend ein Gehäuse (2), das einen Lufteintritt (3) und einen Luftaustritt (4), wenigstens einen Filter (5), der im Bereich des besagten Lufteintritts (3) und/oder -austritts (4) angeordnet ist, und Ventilationsmittel (6), die Schaufeln (9) umfassen, einschließt, wobei die besagte Behandlungsvorrichtung (1) außerdem Mittel zur Regulierung (7) der Ventilation in Abhängigkeit von der Verschmutzung des besagten wenigstens einen Filters (5) umfaßt, derart, um eine konstante Durchflußmenge der zu behandelnden Luft zu sichern, **dadurch gekennzeichnet, daß** die besagten Mittel zur Regulierung (7) der Lüftung Mittel zum Messen (8) des im Bereich der Schaufeln (9) der Ventilationsmittel (6) ausgeübten Drucks umfassen, derart, um jede Veränderung des Drucks festzustellen, die einer Veränderung der Luftdurchflußmenge entspricht.

2. Luftbehandlungsvorrichtung nach Anspruch 1, bei der die Regulierungsmittel (7) Mittel zur Steuerung (10) der Drehgeschwindigkeit der Ventilationsmittel (6) in Abhängigkeit von den Druckmessungen umfassen, derart, um die Lastverluste oder -gewinne auszugleichen und auf die anfängliche Luftdurchflußmenge zurückzukommen.

3. Luftbehandlungsvorrichtung nach irgendeinem der vorgehenden Ansprüche, bei der die besagte Luftbehandlungsvorrichtung (1) wenigstens zwei unterschiedliche Durchflußmengenhöhen umfaßt.

4. Luftbehandlungsvorrichtung nach irgendeinem der vorgehenden Ansprüche, bei der die Ventilationsmittel (6) einen Motor umfassen, der einen Wirkungsgrad über 60% für Drehgeschwindigkeiten zwischen 300 und 1800 Umdrehungen/Minute aufweist.

5. Luftbehandlungsvorrichtung nach irgendeinem der vorgehenden Ansprüche, bei der ein Filter (5) an der Ansaugseite und ein Filter (5) an der Druckseite vorgesehen sind.

6. Luftbehandlungsvorrichtung nach dem vorgehenden Anspruch 5, bei der der Filter (5) an der Ansaugseite der Art gravimetrisch und/oder opacimetrisch ist.

7. Luftbehandlungsvorrichtung nach irgendeinem der Ansprüche 5 und 6, bei der der Filter an der Druckseite der Art geschichtet ist.

8. Luftbehandlungsvorrichtung nach irgendeinem der vorgehenden Ansprüche, bei der Mittel zur Signalisierung (12) von Verschmutzung des besagten wenigstens einen Filters (5) vorgesehen sind.

9. In der Vorrichtung nach irgendeinem der vorgehenden Ansprüche 1 bis 8 angewendetes Luftbehandlungsverfahren, bei dem :
- eine Luftdurchflußmenge ausgewählt wird,
- der auf die Schaufeln (9) der Ventilationsmittel (6) ausgeübte Druck periodisch gemessen wird,
- die Drehgeschwindigkeiten der Ventilationsmittel (6) angepaßt werden, derart, um die Lastverluste oder -gewinne auszugleichen und auf die ausgewählte Durchflußmenge zurückzukommen.

## Claims

1. An air processing device (1) comprising a housing (2) containing an air inlet (3) and an air outlet (4), at least one filter (5) arranged by said air inlet (3) and/or outlet (4) and ventilation means (6) including blades (9), said processing device (1) comprises moreover means (7) for regulating the ventilation relative to the clogging of said at least one filter (5), so as to ensure constant flow rate of the air to be processed, **characterised in that** said ventilation control means (7) include means (8) for measuring the pressure exerted on the blades (9) of the ventilation means (6) so as to detect any pressure variation corresponding to an air flow rate variation.

2. An air processing device according to claim 1, wherein the control means (7) include means (10) for controlling the rotational speed of the ventilation means (6) relative to the pressure measurements in order to compensate for the load losses and gains and to switch back to the initial air flow rate.

3. An air processing device according to any of the previous claims, wherein said air processing device (1) includes at least two different flow rate levels.

4. An air processing device according to any of the previous claims, wherein the ventilation means (6) comprise an engine exhibiting a throughput above 60 % for rotational speeds ranging between 300 and 1,800 rev/min.

5. An air processing device according to any of the previous claims, wherein a suction filter (5) and a discharge filter (5) are provided.

6. An air processing device according to the previous claim 5, wherein the suction filter (5) is of gravimetric and/or opacimetric type.

7. An air processing device according to either of the claims 5 and 6, wherein the discharge filter is of laminar type.

8. An air processing device according to any of the previous claims 1, wherein clogging indication means (12) of at least one filter (5) are provided.

9. An air processing method, implemented in the air processing device according to any of the previous claims 1 to 8, wherein:
- an air flow rate is selected,
- the pressure exerted on the blades (9) of the ventilation means (6) is measure periodically,
- the rotational speeds of the ventilation means (6) are adjusted in order to compensate for the load losses or gains and to switch back to the flow rate selected.
